(19) Europäisches Patentamt
European Patent Office
Office européen des brevets

(11) **EP 4 535 336 A1**

(12) **EUROPEAN PATENT APPLICATION**
published in accordance with Art. 153(4) EPC

(43) Date of publication:
**09.04.2025 Bulletin 2025/15**

(21) Application number: **22944903.8**

(22) Date of filing: **02.06.2022**

(51) International Patent Classification (IPC):
*G09C 1/00* $^{(2006.01)}$

(52) Cooperative Patent Classification (CPC):
**G09C 1/00**

(86) International application number:
**PCT/JP2022/022486**

(87) International publication number:
**WO 2023/233622 (07.12.2023 Gazette 2023/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NIPPON TELEGRAPH AND
TELEPHONE CORPORATION
Chiyoda-ku, Tokyo 100-8116 (JP)**

(72) Inventor: **MICHIHIRO, Daiki
Musashino-shi, Tokyo 180-8585 (JP)**

(74) Representative: **MERH-IP Matias Erny Reichl
Hoffmann
Patentanwälte PartG mbB
Paul-Heyse-Straße 29
80336 München (DE)**

(54) **SECRET COMPUTING DEVICE, SECRET COMPUTING METHOD, AND PROGRAM**

(57)     There is provided a secure computation device that performs computation while keeping input data secret, the input data including an encrypted value sequence including a missing value, the secure computation device including: a flag sequence generating unit that generates a flag sequence that is a sequence of flags indicating a value obtained by encrypting 0, when a corresponding value is a missing value, and a value obtained by encrypting 1, when the corresponding value is not a missing value; and a true data count computing unit that computes the number of true data items excluding a missing value by summing values of flags in the flag sequence.

FIG. 2

**Description**

Technical Field

The present invention relates to a secure computation device, a secure computation method, and a program for computing a representative value of data excluding missing values while keeping input data including the missing values secret.

Background Art

As a method for obtaining a specific computation result without restoring an encrypted numerical value, there is a method called secure computation (for example, refer to Non Patent Literature 1 and Non Patent Literature 2). In the method described in Non Patent Literature 1, encryption of distributing fragments of numerical values to three secure computation devices is performed, and the three secure computation devices perform cooperative calculation, and thus the results of addition/subtraction, constant addition, multiplication, constant multiplication, logical operation (NOT, logical product, logical sum, exclusive logical sum), and data format conversion (integer and binary number) can be obtained in a state of being distributed to the three secure computation devices, that is, while being encrypted, without restoring the numerical values. In addition, in Non Patent Literature 2, a function that can be executed in secure computation is specifically described. In recent years, there has also been proposed machine learning on secure computation.

Citation List

Non Patent Literature

Non Patent Literature 1: Koji Chida, Koki Hamada, Dai Ikarashi, Katsumi Takahashi, "Keiryo kensho kano 3 party hitoku kansu keisan no saiko (in Japanese) (A Three-Party Secure Function Evaluation with Lightweight Verifiability Revisited)" In CSS,2010.
Non Patent Literature 2: Naoto Kiribuchi, Dai Ikarashi, Koki Hamada, Ryo Kikuchi, "MEVAL3: A Library for Programmable Secure Computation", In SCIS,2018
Non Patent Literature 3: the pandas development team, "pandas.DataFrame.fillna", [online], [retrieved on May 27, 2022], Internet <URL: https://pandas.pydata.org/docs/reference/api/pandas.DataFra me.fillna.html>

Summary of Invention

Technical Problem

Data is often missing. For example, in a questionnaire survey, in a case where a responder does not answer or a sensor cannot acquire data for some reason when the data is acquired by the sensor, the corresponding data will be missing. Such missing data is called a missing value. The missing value may be referred to as a lost value, null, or NA (not available), in addition to a missing value. In a case where data includes a missing value, many machine learning models cannot treat the data as learning data. In this case, a process of replacing a missing value with a representative value representing the data is generally often performed (Non Patent Literature 3). As the representative value, a mean, a median, or a mode of data excluding the missing values is generally used.

However, since a method of calculating a representative value of data including a missing value in secure computation is not definite, the missing value cannot be complemented by applying the conventional technology to machine learning in secure computation.

Therefore, an object of the present invention is to provide a secure computation device that realizes data transformation for calculating a representative value of data including a missing value while keeping the number and locations of missing values secret.

Solution to Problem

A secure computation device of the present invention is a secure computation device that performs calculation while keeping input data secret and includes a flag sequence generating unit and a true data count computing unit, the input data including an encrypted value sequence including a missing value.

The flag sequence generating unit generates a flag sequence that is a sequence of flags indicating a value obtained by encrypting 0, when a corresponding value is a missing value, and a value obtained by encrypting 1, when the corresponding value is not a missing value. The true data count computing unit computes the number of true data items excluding missing values by summing values of flags in the flag sequence.

Advantageous Effects of Invention

According to a secure computation device of the present invention, data transformation for calculating a representative value of data including a missing value is realized while keeping the number and locations of missing values secret.

Brief Description of Drawings

Fig. 1 is a block diagram illustrating secure distribution processing by a plurality of secure computation devices connected to a network.
Fig. 2 is a block diagram illustrating a functional configuration of a secure computation device of Example 1.
Fig. 3 is a flowchart illustrating an operation of the secure computation device of Example 1.
Fig. 4 is a block diagram illustrating a functional configuration of a mean calculating unit of Example 1.
Fig. 5 is a flowchart illustrating an operation of the mean calculating unit of Example 1.
Fig. 6 is a diagram illustrating an example of data processed by a correction value sequence generating unit of the mean calculating unit of Example 1.
Fig. 7 is a block diagram illustrating a functional configuration of a median calculating unit of Example 1.
Fig. 8 is a flowchart illustrating an operation of the median calculating unit of Example 1.
Fig. 9 is a diagram illustrating an example of data processed by a missing value overwriting unit of the median calculating unit of Example 1.
Fig. 10 is a diagram illustrating an example of data processed by a value ascending sort unit and an index flag sequence generating unit of the median calculating unit according to Example 1.
Fig. 11 is a diagram illustrating an example of data processed by an odd flag sequence generating unit and an even flag sequence generating unit of the median calculating unit of Example 1.
Fig. 12 is a block diagram illustrating a functional configuration of a mode calculating unit of Example 1.
Fig. 13 is a flowchart illustrating an operation of the mode calculating unit according to Example 1.
Fig. 14 is a diagram illustrating an example of data processed by a missing value overwriting unit, a value ascending sort unit, and a boundary flag sequence generating unit of the mode calculating unit of Example 1.
Fig. 15 is a diagram illustrating an example of data processed by a value vector generating unit, a frequency vector generating unit, and a mode output unit of the mode calculating unit of Example 1.
Fig. 16 is a diagram illustrating a functional configuration example of a computer.

Description of Embodiments

Hereinafter, embodiments of the present invention will be described in detail. Note that components having the same functions will be denoted by the same reference numerals, and redundant description will be omitted.

[Example 1]

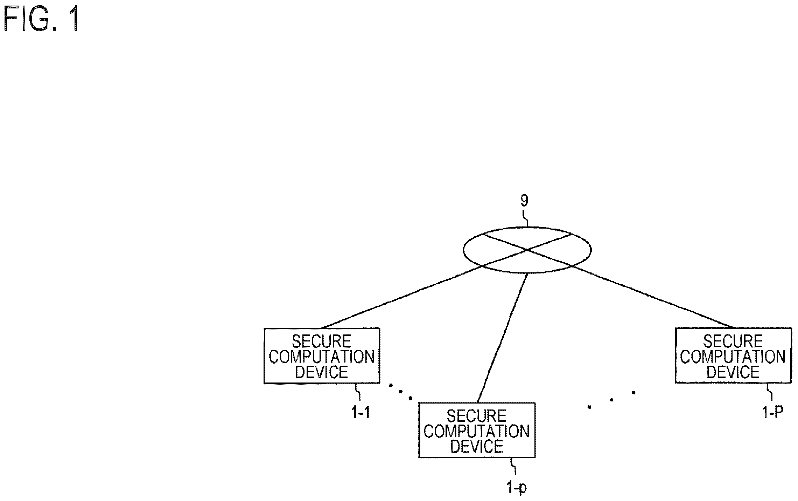

With reference to Fig. 1, secure distribution processing performed by a plurality of secure computation devices 1-1, ... 1-p, ... 1-P (P is an integer of 2 or more, p = 1, ..., P) of Example 1 connected to a network 9 will be described. As illustrated in the drawing, the secure computation devices 1-1, ... 1-p, ... 1-P of the present example are connected to the network 9 to be able to communicate with each other. The P secure computation devices 1-1, ... 1-p, ... 1-P all have the same function and will be collectively referred to as the secure computation device 1. The data treated by the secure computation device 1 is encrypted through a secure distribution according to a configuration illustrated in the drawing and is computed while being kept encrypted.

Note that the data treated by the secure computation device of the present invention needs to be encrypted by some method and computed while being kept encrypted, but does not need to be encrypted through a secure distribution.

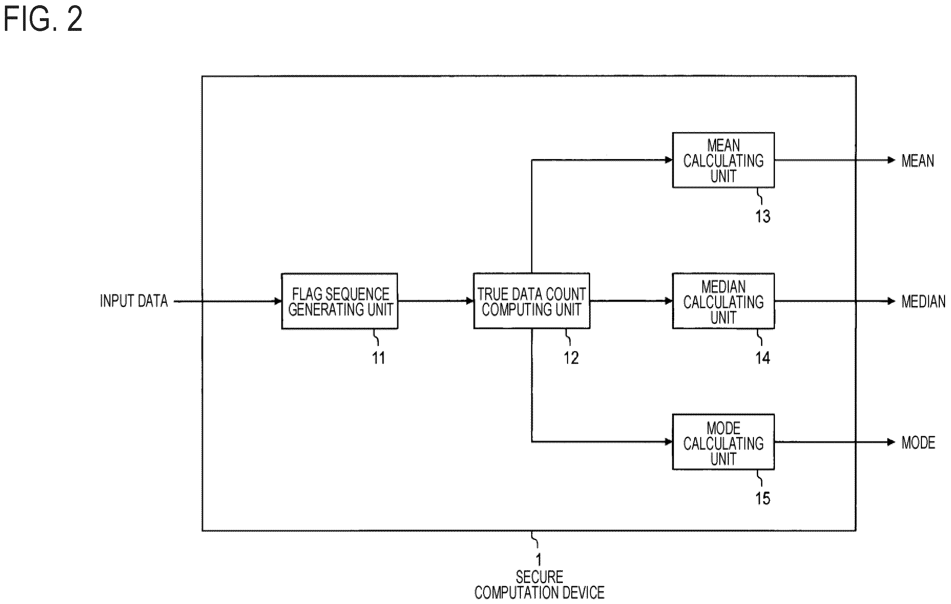

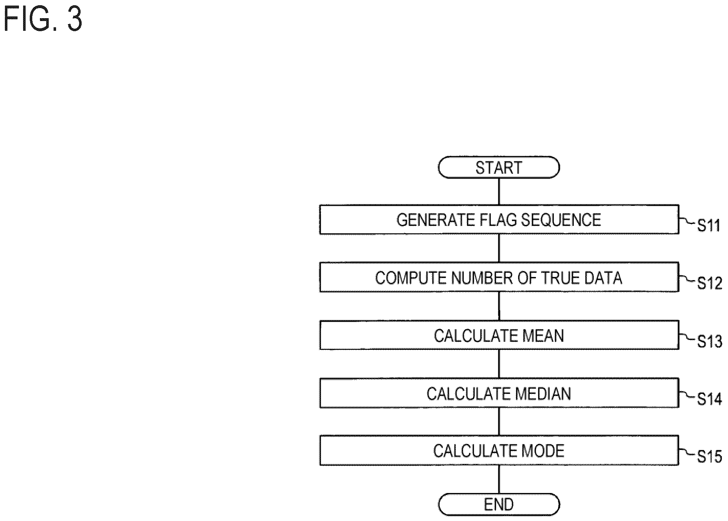

With reference to Fig. 2, a functional configuration of the secure computation device 1 that is a device performing calculation while keeping input data secret will be described, the input data including an encrypted value sequence including a missing value. As illustrated in the drawing, the secure computation device 1 of the present example includes a flag sequence generating unit 11, a true data count computing unit 12, a mean calculating unit 13, a median calculating unit 14, and a mode calculating unit 15. Hereinafter, operations of each configuration requirement will be described with reference to Fig. 3.

<Flag Sequence Generating unit 11>

An encrypted value sequence including a missing value is represented as $v = v_1, ...,$ and $v_n$ including $n \geq 2$ values, and any value is represented as $v_i$ using an index i. Regarding v, a result of inspecting for missing values is represented by flag sequences $f = f_1, ..., f_n$, and the missing value is represented by NA.

The flag sequence generating unit 11 generates a flag sequence that is the following expression and a sequence of flags indicating a value obtained by encrypting 0, when a corresponding value is a missing value (NA), and a value obtained by encrypting 1, when the corresponding value is not a missing value (NA) (S11).

[Math. 1]

$$ f_i = \begin{cases} 0 \ if \ v_i = NA \\ 1 \ if \ v_i \neq NA \end{cases} $$

Here, the method proposed in Reference Patent Literature 1 can be used for inspecting for missing values.

(Reference Patent Literature 1: JP 5957126 B1)

<True Data Count Computing Unit 12>

The true data count computing unit 12 computes the number m of true data items excluding missing values by summing values of flags in a flag sequence ($\Sigma^n_{i=1} f_i$) (S12). Hence, the true data count computing unit 12 computes the number m of true data items from $m = \Sigma^n_{i=1} f_i$.

<Mean Calculating Unit 13>

The mean calculating unit 13 calculates a mean of the value sequence based on the value sequence, the flag sequence, and the number m of true data (S13). Details thereof will be described below.

<Median Calculating Unit 14>

The median calculating unit 14 calculates a median of the value sequence based on the value sequence, the flag sequence, and the number m of true data (S14). Details thereof will be described below.

<Mode Calculating Unit 15>

The mode calculating unit 15 calculates a mode of the value sequence by using aggregate sum calculation based on the value sequence, the flag sequence, and the number m of true data (S15). Details thereof will be described below.

Note that an aggregate function is a calculation for obtaining statistical values divided into groups on the basis of a value of a key attribute when there are a key attribute and a value attribute in a table. An aggregate sum is one of the aggregate functions and is a calculation for aggregating a sum of desired value attributes for each group when the table is divided into groups on the basis of the value of the key attribute. For example, the method proposed in Reference Patent Literature 2 can be used for the aggregate sum calculation.

(Reference Patent Literature 2: JP 6973632 B2)

The secure aggregate sum system of Reference Patent Literature 2 inputs:

- a vector of a value attribute when sorting is performed based on a value of a key attribute;
- a flag in which the last element of each group is true and the other elements are false when groups are divided on the basis of the value of the key attribute;

- the number of groups; and
- a vector in which the value of the key attribute becomes an element without duplication, and outputs:
- a vector indicating a sum of value attributes for each group.

<Detailed Functional Configuration of Mean Calculating Unit 13>

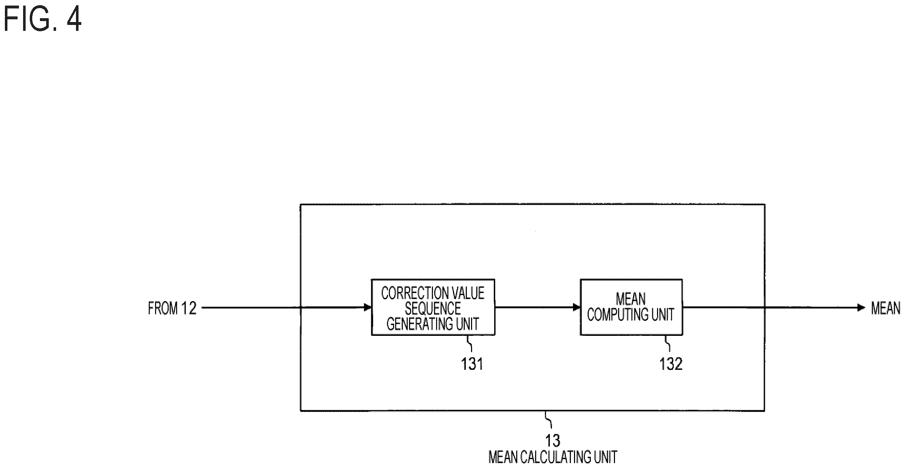

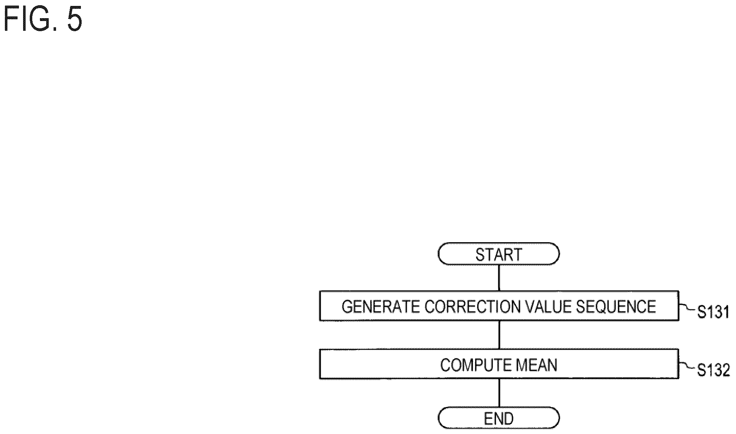

Hereinafter, a detailed functional configuration of the mean calculating unit 13 will be described with reference to Fig. 4. As illustrated in the drawing, the mean calculating unit 13 of the present example includes a correction value sequence generating unit 131 and a mean computing unit 132. Hereinafter, operations of each configuration requirement will be described with reference to Fig. 5.

<<Correction Value Sequence Generating Unit 131>>

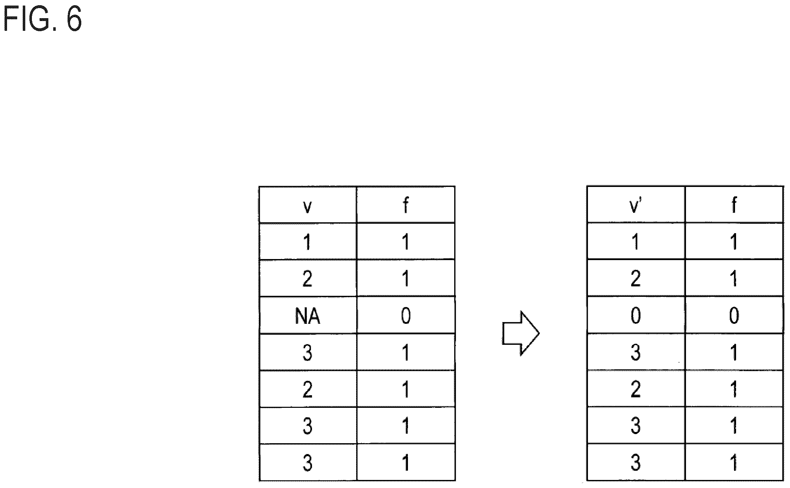

The correction value sequence generating unit 131 sets a product of a value and a corresponding flag, that is, v' = v × f, as a correction value and generates a correction value sequence v' (S131). Note that a multiplication result of the missing value (NA) and 0 is assumed to be 0. Therefore, values other than the missing value in the correction value sequence v' are the same as values in a value sequence v, and the missing value is converted into 0. An operation example of the correction value sequence generating unit 131 is illustrated in Fig. 6. Referring to a table on the left of the drawing before processing and a table on the right of the drawing after the processing, it can be found that NA has been converted to 0.

<<Mean Computing Unit 132>>

The mean computing unit 132 divides the total sum of the correction values by the number of true data, that is, computes the following mean expression to obtain a mean of the input data (S132).

[Math. 2]

$$\mathrm{mean} = \frac{\sum_{i=1}^{n} v'_i}{m}$$

<Detailed Functional Configuration of Median Calculating Unit 14>

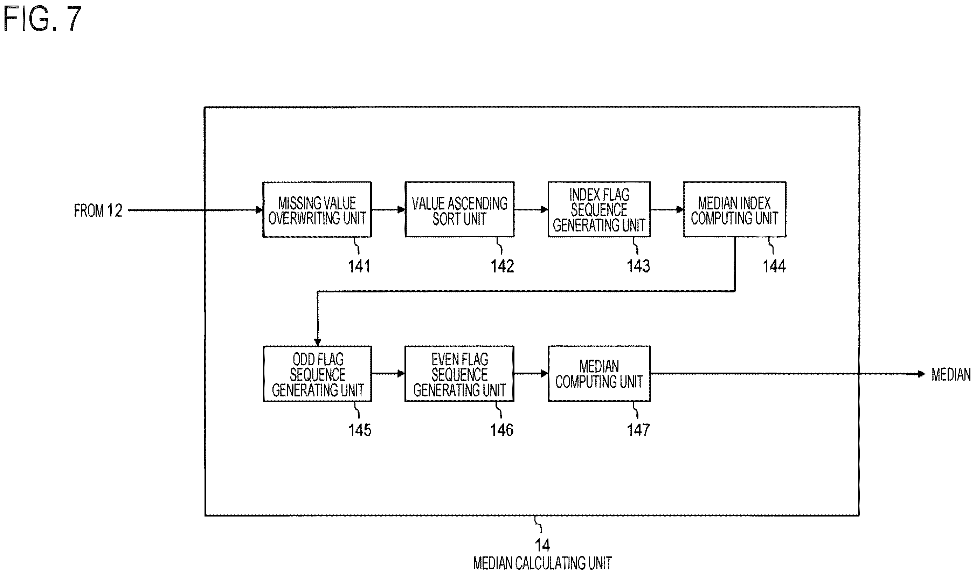

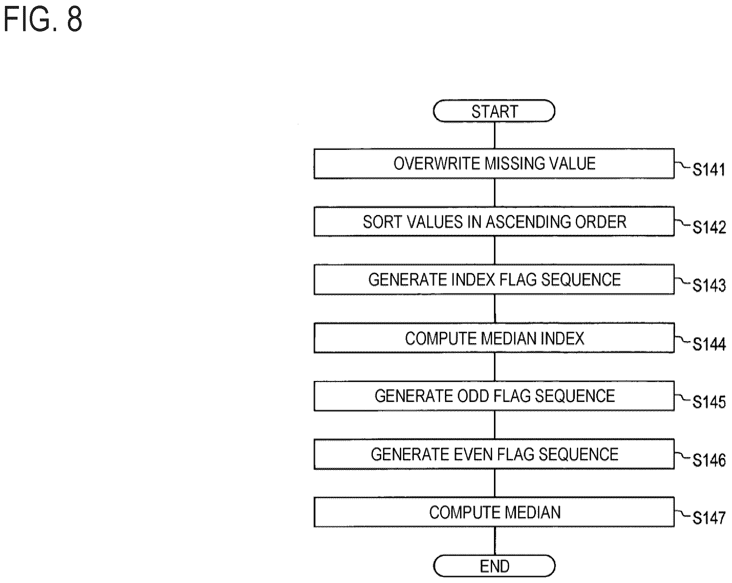

Hereinafter, a detailed functional configuration of the median calculating unit 14 will be described with reference to Fig. 7. As illustrated in the drawing, the median calculating unit 14 of the present example includes a missing value overwriting unit 141, a value ascending sort unit 142, an index flag sequence generating unit 143, a median index computing unit 144, an odd flag sequence generating unit 145, an even flag sequence generating unit 146, and a median computing unit 147. Hereinafter, operations of each configuration requirement will be described with reference to Fig. 8.

<<Missing Value Overwriting Unit 141>>

The missing value overwriting unit 141 performs a descending sort on data that is a set $(v_i, f_i)$ of values of v and f associated by an index, on the basis of f. Regarding a sorting process (including a stable sort), for example, a sort described in Reference Non Patent Literature 1 can be used.

(Reference Non Patent Literature 1: Dai Ikarashi, Koki Hamada, Ryo Kikuchi, Koji Chida, "A Design and an Implementation of Super-high-speed Multi-party Sorting: The Day When Multi-party Computation Reaches Scripting Languages",) CSS2017)

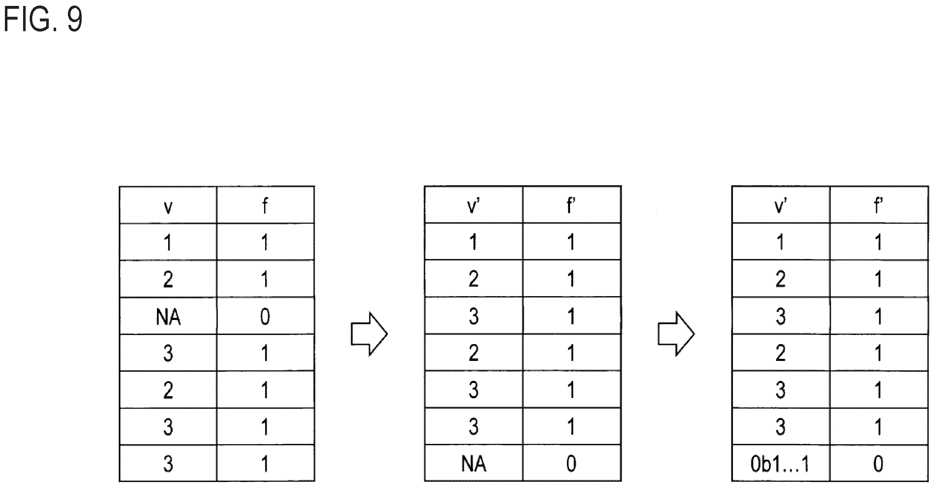

Here, v and f after a sort are denoted as v' and f', respectively. Consequently, the missing value moves backward. A left table of Fig. 9 illustrates a state before a sorting process performed by the missing value overwriting unit 141, and a center table of the drawing illustrates a state after the sorting process performed by the missing value overwriting unit 141. Note that this sorting process is not essential and can be omitted as appropriate.

Next, the missing value overwriting unit 141 overwrites the missing value with a value larger than the maximum value of the values in the true data (S141). A right table of Fig. 9 illustrates a state after an overwriting process performed by the missing value overwriting unit 141.

For example, the missing value overwriting unit 141 may overwrite the missing value with the maximum value that can be expressed by a processing system thereof. If the value is stored as an integer type without a sign, the maximum value is a value (0b1 ... 1) in which all bits are 1. This is a process of overwriting $v_i'$ with the maximum value when $f_i' = 0$ in which $1 \le i \le n$.

Note that, since step S141 is a process to be performed to correctly perform an ascending sort which is a subsequent process, it is necessary to replace the missing value with a value larger than the maximum value of values in the true data, but it is not always necessary to replace NA with a value (0b1 ... 1) in which all bits are 1. However, since all the values in the value sequence are encrypted as described above, in order to reliably convert the NA to a large value without knowing the values in the value sequence, it is considered that the simplest method is to overwrite the NA with the value (0b1 ... 1) in which all bits are 1.

<<Value Ascending Sort Unit 142>>

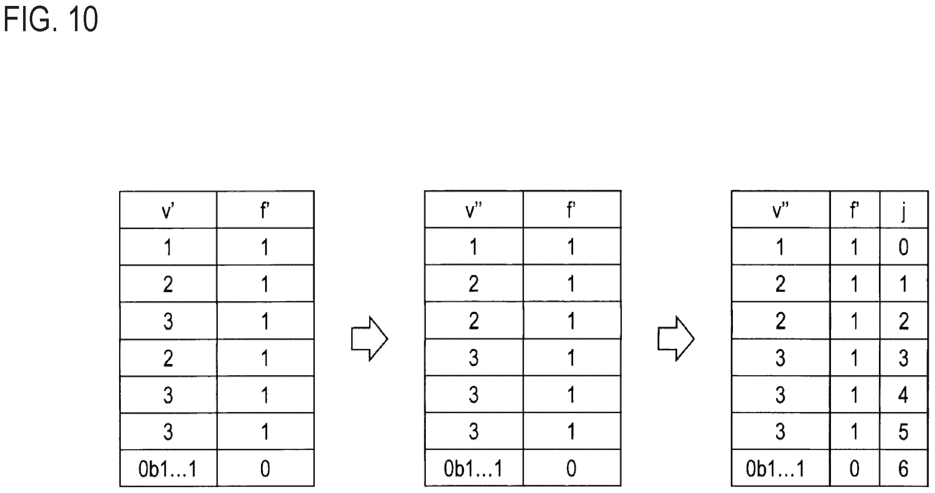

The value ascending sort unit 142 sorts data including the value sequence v' and the flag sequence in ascending order based on the value v' (S142). A sorting result is represented as v''. A left table of Fig. 10 illustrates a state before an ascending sort process performed by the value ascending sort unit 142, and a center table of the drawing illustrates a state after the ascending sort process performed by the value ascending sort unit 142.

<<Index Flag Sequence Generating Unit 143>>

The index flag sequence generating unit 143 generates an index flag sequence j which is a sequence of index flags in which a value corresponding to a first row of the data is a value obtained by encrypting 0 ($j_1 = 0$), and values corresponding to other rows are values obtained by encrypting values ($j_2 = 1, j_3 = 2, j_n = n - 1$) obtained by adding 1 to values corresponding to previous rows (S143). A right table of Fig. 10 illustrates a state after a flag sequence generating process performed by the index flag sequence generating unit 143.

<<Median Index Computing Unit 144>>

The median index computing unit 144 computes, as a median index $I_{med}$, that is, the following expression, a value obtained by rounding down a decimal point of (m - 1)/2, where m represents the number of true data (S144).

[Math. 3]

$$I_{med} = \left\lfloor \frac{m-1}{2} \right\rfloor$$

Note that the parentheses shown in the above expression mean a calculation of rounding down a fractional part.

<<Odd Flag Sequence Generating Unit 145>>

The odd flag sequence generating unit 145 generates an odd flag sequence $f_{odd}$, that is, the following expression, which is a sequence of odd flags indicating a value obtained by encrypting a value of 0, when values of the index flag are not equal to values of the median index ($I_{med} \ne j_i$, $1 \le i \le n$), and a value obtained by encrypting a value of 1, when the values of the index flag are equal to the values of the median index ($I_{med} = j_i$, $1 \le i \le n$) (S145).

[Math. 4]

$$f_{odd} = \begin{cases} 0 \ if \ I_{med} \ne j_i \\ 1 \ if \ I_{med} = j_i \end{cases}$$

<<Even Flag Sequence Generating Unit 146>>

The even flag sequence generating unit 146 generates an even flag sequence $f_{even}$, that is, the following expression, that is a sequence of even flags in which a values corresponding to a case where values of the odd flag are 1 is 1 and which indicate a value obtained by encrypting a value of 0, when the values of the index flag are not equal to a value obtained by adding 1 to the median index ($I_{med} + 1 \neq j_i$, $1 \leq i \leq n$), a value obtained by encrypting a value of 1, when the values of the index flag are equal to a value obtained by adding 1 to the median index ($I_{med} + 1 = j_i$, $1 \leq i \leq n$) (S146).

[Math. 5]

$$f_{even} = \begin{cases} 0 \ if \ I_{med} + 1 \neq j_i \\ 1 \ if \ I_{med} + 1 = j_i \end{cases},$$

further, $f_{even} = \mathrm{or}(f_{even}, f_{odd})$

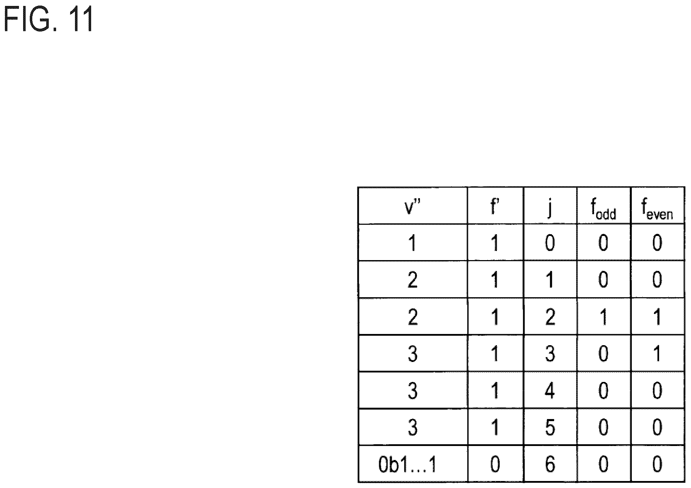

Note that or represents a process of performing a general logical sum. A table of Fig. 11 illustrates a state after generation of the odd flag sequence and the even flag sequence.

<<Median Computing Unit 147>>

The median computing unit 147 computes, as a median, a sum of products of the values v" and the odd flag $f_{odd}$, if the number m of true data is an odd number, and computes, as a median, a value obtained by dividing a sum of products of the values v" and the even flag $f_{even}$ by 2 if the number m of true data is an even number, that is, the following expression, (S147).

[Math. 6]

$$\mathrm{median} = \begin{cases} \sum_{i=1}^{n} v_i'' \cdot f_{odd} & \text{if m is an odd number} \\ \dfrac{\sum_{i=1}^{n} v_i'' \cdot f_{even}}{2} & \text{if m is an even number} \end{cases}$$

<Detailed Functional Configuration of Mode Calculating Unit 15>

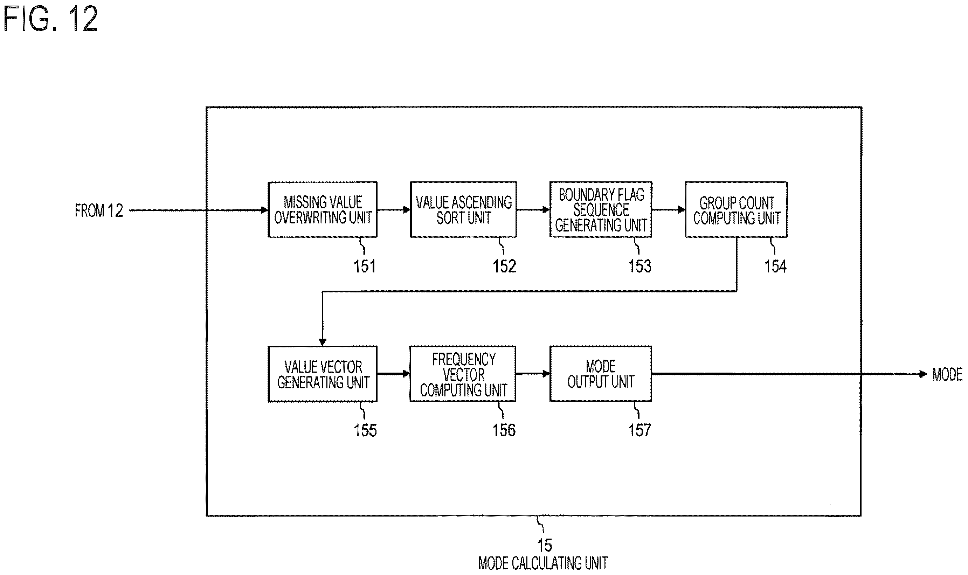

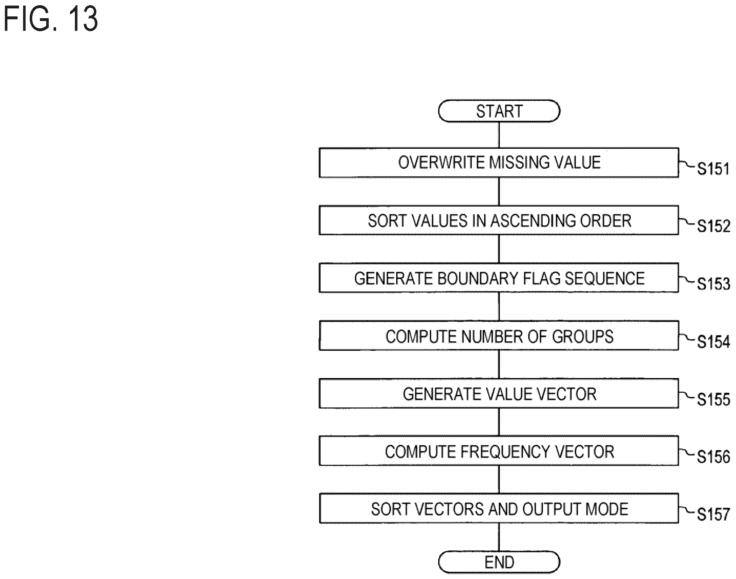

Hereinafter, a detailed functional configuration of the mode calculating unit 15 will be described with reference to Fig. 12. As illustrated in the drawing, the mode calculating unit 15 of the present example includes a missing value overwriting unit 151, a value ascending sort unit 152, a boundary flag sequence generating unit 153, a group count computing unit 154, a value vector generating unit 155, a frequency vector computing unit 156, and a mode output unit 157.
Hereinafter, operations of each configuration requirement will be described with reference to Fig. 13.

<<Missing Value Overwriting Unit 151>>

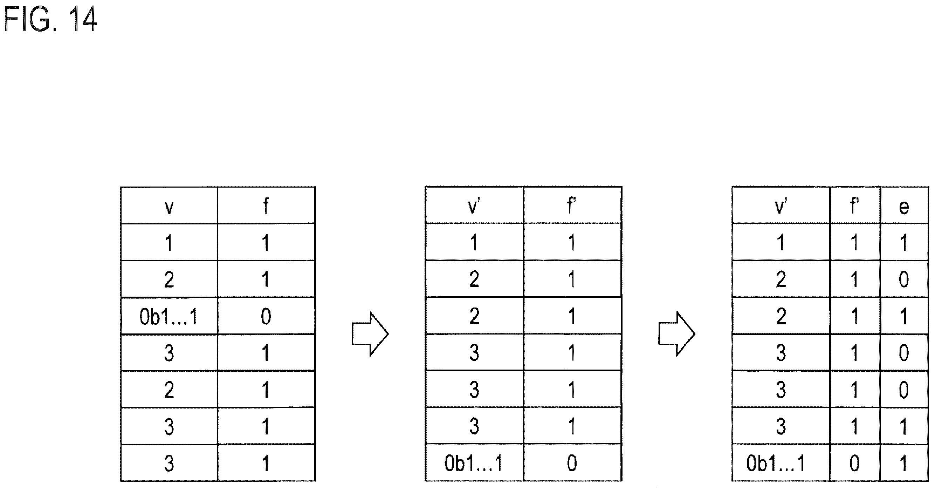

The missing value overwriting unit 151 overwrites the missing value with a value larger than the maximum value of the values in the true data (S151). A left table of Fig. 14 illustrates a state after a missing value overwriting process performed by the missing value overwriting unit 151.

<<Value Ascending Sort Unit 152>>

The value ascending sort unit 152 sorts data ($v_i$, $f_i$) including the value sequence and the flag sequence in ascending order based on the value v (S152). Sorted results are represented by v' and f', respectively.

A center table of Fig. 14 illustrates a state after an ascending sort process performed by the value ascending sort unit 152.

<<Boundary Flag Sequence Generating Unit 153>>

The boundary flag sequence generating unit 153 generates a boundary flag sequence, that is, the following expression, which is a sequence of boundary flags in which a value corresponding to a predetermined value $v_i$' is a value obtained by encrypting 0, when a value of the predetermined value is equal to a value of a next value thereafter ($v_i$'= $v_{i+1}$', $1 \leq i \leq n$ - 1), a value corresponding to the predetermined value $v_i$' is a value obtained by encrypting 1 when the value of the predetermined value is not equal to the value of the next value thereafter ($v_i$' $\neq v_{i+1}$', $1 \leq i \leq n$ - 1), and a value corresponding to a value $v_n$' located in a lowermost row of the value sequence is a value obtained by encrypting 1 (S153).

[Math. 7]

$$e_i = \begin{cases} 0 \ if \ v_i' = v_{i+1}' \\ 1 \ if \ v_i' \neq v_{i+1}' \end{cases}$$
$$e_n = 1$$

A right table of Fig. 14 illustrates a state after a flag sequence generating process performed by the boundary flag sequence generating unit 153. This process enables a boundary flag e in which an index of the last element of values included in a key attribute v' is 1 to be derived.

<<Group Count Computing Unit 154>>

The group count computing unit 154 computes the number of groups $g = \Sigma^n_{i=1} e_i$ with a sum of the boundary flag sequences as the number g of groups (S154).

<<Value Vector Generating Unit 155>>

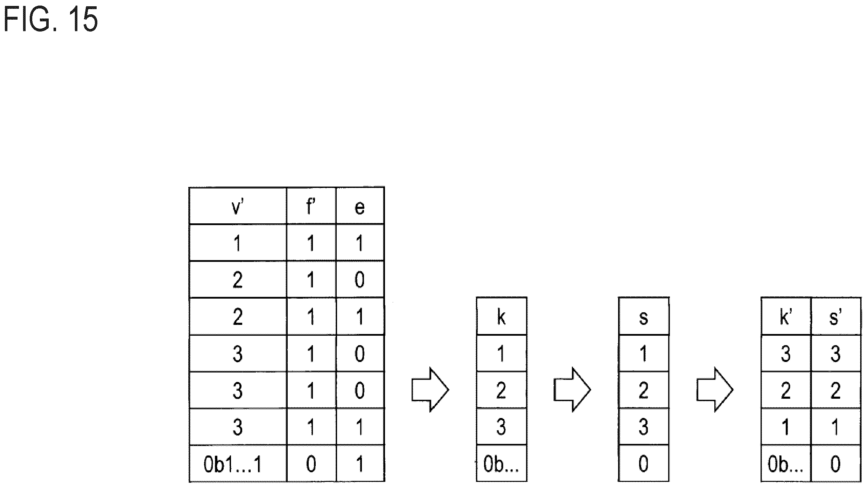

The value vector generating unit 155 generates a value vector k having a value corresponding to the value of 1 of the boundary flag as an element, that is, a value vector k as $k_j = v_i$' when $e_i = 1$ from the beginning for $1 \leq i \leq n$ and $1 \leq j \leq g$ (S155). The value vector k is a vector in which a value of a key attribute becomes an element without duplication. An example of the value vector generated by the value vector generating unit 155 is illustrated in a second table from the left in Fig. 15.

<<Frequency Vector Computing Unit 156>>

The frequency vector computing unit 156 computes a frequency vector $s = s_1, ..., s_g$ that is a sum of values (value attributes) of the flags in each group delimited based on the value of 1 of the boundary flag (S156). An example of the frequency vector generated by the frequency vector computing unit 156 is illustrated in a third table from the left in Fig. 15.

<<Mode Output Unit 157>>

The mode output unit 157 sorts data ($k_i$, $s_i$) including a set of individual elements of the value vector k and the frequency vector s in descending order by using the frequency vector s as a key and outputs an element of a first value vector as a mode (mode = $k_1$') (S157). The rightmost table in Fig. 15 illustrates a state after a descending sort process performed by the mode output unit 157.

<Effects of Secure Computation Device 1 of Example 1>

According to the secure computation device 1 of Example 1, it is possible to calculate, by the secure computation, the representative value of the values other than the missing value for the data including the missing value while keeping the number of missing values and the index having the missing value secret.

<Supplementary Note>

The device according to the present invention includes, for example, an input unit that can be connected to a keyboard or the like as a single hardware entity, an output unit that can be connected to a liquid crystal display or the like, a communication unit that can be connected to a communication device (e.g., a communication cable) capable of communicating with the outside of the hardware entity, a central processing unit (CPU which may include a cache memory or a register), a RAM or a ROM which is a memory, an external storage device as a hard disk, and a bus that connects the input unit, the output unit, the communication unit, the CPU, the RAM, the ROM, and the external storage device so that data can be exchanged therebetween. A device (drive) or the like that can write and read data in and from a recording medium such as a CD-ROM may be provided in the hardware entity, as necessary. Examples of a physical entity including such a hardware resource include a general-purpose computer.

The external storage device of the hardware entity stores programs required for implementing the above-described functions, data required for processing of the programs, and the like (the programs may be stored, for example, in a ROM as a read-only storage device instead of the external storage device). Data or the like obtained by the processing of these programs is appropriately stored in a RAM, an external storage device, or the like.

In the hardware entity, each program stored in the external storage device (or ROM or the like) and data required for processing of each program are read into a memory as necessary and are appropriately interpreted and processed by the CPU. As a result, the CPU implements a predetermined function (each component represented as ... unit, ... means, or the like).

The present invention is not limited to the above-described embodiments and can be appropriately modified without departing from the gist of the present invention. The pieces of processing described in the foregoing embodiments may be executed not only chronologically in accordance with the described order, but also in parallel or individually in accordance with the processing capability of a device that executes the processing or as necessary.

As described above, in a case where the processing function of the hardware entity (the device according to the present invention) described in the foregoing embodiments is implemented by a computer, processing details of the function of the hardware entity are described by a program. The computer then executes the program, and thus, the processing function of the hardware entity is implemented in the computer.

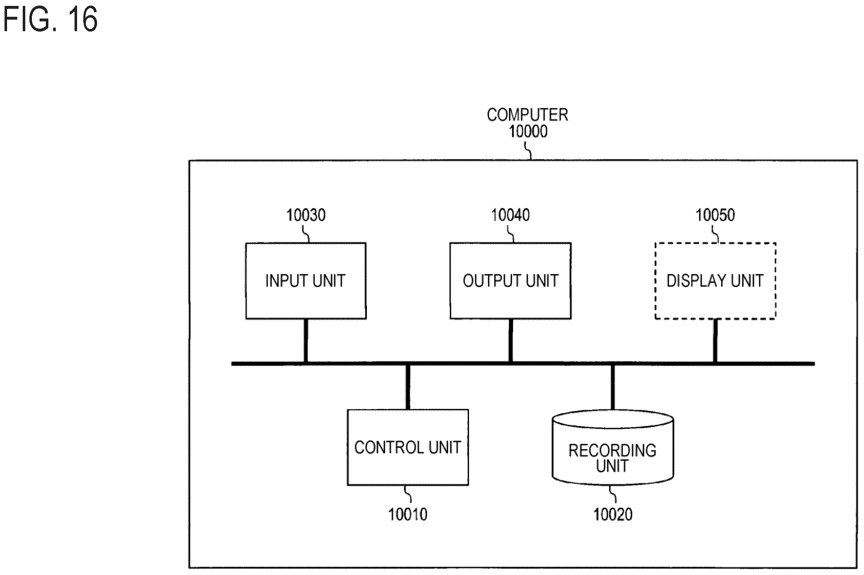

The various kinds of processing described above can be performed by causing a recording unit 10020 of a computer 10000 illustrated in Fig. 16 to read a program for executing each step of the method described above and causing a control unit 10010, an input unit 10030, an output unit 10040, and the like to operate.

The program in which the processing content is written may be recorded on a computer-readable recording medium. The computer-readable recording medium may be, for example, any recording medium such as a magnetic recording device, an optical disc, a magneto-optical recording medium, or a semiconductor memory. Specifically, for example, a hard disk device, a flexible disk, a magnetic tape, or the like can be used as the magnetic recording device, a digital versatile disc (DVD), a DVD random access memory (DVD-RAM), a compact disc read only memory (CD-ROM), a CD recordable/rewritable (CD-R/RW), or the like can be used as the optical disc, a magneto-optical disc (MO) or the like can be used as the magneto-optical recording medium, and an electrically erasable and programmable-read only memory (EEP-ROM) or the like can be used as the semiconductor memory.

Moreover, the program is distributed by, for example, selling, transferring, or renting a portable recording medium such as a DVD or a CD-ROM on which the program is recorded. Furthermore, the program may be stored in a storage device of a server computer, and the program may be distributed by transferring the program from the server computer to another computer via a network.

For example, a computer for executing such a program first temporarily stores a program recorded on a portable recording medium or a program transferred from a server computer in a storage device of the computer. Then, when executing processing, the computer reads the program stored in the recording medium of the computer and executes the processing according to the read program. Moreover, as another mode of the program, the computer may read the program directly from a portable recording medium and execute processing according to the program, or alternatively, the computer may sequentially execute processing according to a received program every time the program is transferred from a server computer to the computer. Moreover, the above-described processing may be executed by a so-called application service provider (ASP) type service that implements a processing function only by an execution instruction and result acquisition without transferring the program from a server computer to the computer. Note that the program in the present embodiment includes information that is used for processing by an electronic computer and is equivalent to the program (data or the like that is not a direct command to the computer but has property that defines processing performed by the computer).

Moreover, although the hardware entity is formed by executing a predetermined program in a computer in this mode, at least some of the processing details may be implemented by hardware.

**Claims**

1. A secure computation device that performs computation while keeping input data secret, the input data including an encrypted value sequence including a missing value, the secure computation device comprising:

a flag sequence generating unit that generates a flag sequence that is a sequence of flags indicating a value obtained by encrypting 0, when a corresponding value is a missing value, and a value obtained by encrypting 1, when the corresponding value is not a missing value; and
a true data count computing unit that computes the number of true data items excluding a missing value by summing values of flags in the flag sequence.

2. The secure computation device according to claim 1, comprising:

a correction value sequence generating unit that sets products of the values and corresponding flags as correction values and generates a correction value sequence; and
a mean computing unit that computes a mean of the input data by dividing a sum of the correction values by the number of true data.

3. The secure computation device according to claim 1, comprising:

a missing value overwriting unit that overwrites the missing value with a value larger than a maximum value of values in the true data;
a value ascending sort unit that sorts data including the value sequence and the flag sequence in ascending order based on the values;
an index flag sequence generating unit that generates an index flag sequence which is a sequence of index flags in which a value corresponding to a first row of the data is a value obtained by encrypting 0, and a value corresponding to another row is a value obtained by encrypting a value obtained by adding 1 to a value corresponding to a previous row;
a median index computing unit that computes, as a median index, a value obtained by rounding down after a decimal point of $(m - 1)/2$, where $m$ represents the number of true data;
an odd flag sequence generating unit that generates an odd flag sequence which is a sequence of odd flags indicating a value obtained by encrypting a value of 0, when values of the index flag are not equal to values of the median index, and a value obtained by encrypting a value of 1, when the values of the index flag are equal to the values of the median index;
an even flag sequence generating unit that generates an even flag sequence that is a sequence of even flags in which a value corresponding to a case where values of the odd flag are 1 is 1 and which indicate a value obtained by encrypting a value of 0, when the values of the index flag are not equal to a value obtained by adding 1 to the median index, and a value obtained by encrypting a value of 1, when the values of the index flag are equal to a value obtained by adding 1 to the median index; and
a median computing unit that computes, as a median, a sum of products of the values and the odd flag, when the number of true data is an odd number, and computes, as a median, a value obtained by dividing a sum of products of the values and the even flag by 2 when the number of true data is an even number.

4. The secure computation device according to claim 1, comprising:

a missing value overwriting unit that overwrites the missing value with a value larger than a maximum value of values in the true data;
a value ascending sort unit that sorts data including the value sequence and the flag sequence in ascending order based on the values;
a boundary flag sequence generating unit that generates a boundary flag sequence which is a sequence of boundary flags in which a value corresponding to a predetermined value is a value obtained by encrypting 0, when a value of the predetermined value is equal to a value of a next value after the predetermined value, a value corresponding to the predetermined value is a value obtained by encrypting 1 when the value of the predetermined value is not equal to the value of the next value after the predetermined value, and a value corresponding to a value located in a lowermost row of the value sequence is a value obtained by encrypting 1;

a value vector generating unit that generates value vectors having values corresponding to a value of 1 of the boundary flag as respective elements;

a frequency vector computing unit that computes a frequency vector that is a sum of values of the flags in each group delimited based on the value of 1 of the boundary flag; and

a mode output unit that sorts data including a set of individual elements of the value vector and the frequency vector in descending order by using the frequency vector as a key and outputs an element of a first value vector as a mode.

5. A secure computation method executed by a secure computation device that performs computation while keeping input data secret, the input data including an encrypted value sequence including a missing value, the secure computation method comprising:

   a flag sequence generating step of generating a flag sequence that is a sequence of flags indicating a value obtained by encrypting 0, when a corresponding value is a missing value, and a value obtained by encrypting 1, when the corresponding value is not a missing value; and

   a true data count computing step of computing the number of true data items excluding a missing value by summing values of flags in the flag sequence.

6. A program for causing a computer to function as the secure computation device according to any one of claims 1 to 4.

EP 4 535 336 A1

FIG. 1

FIG. 2

INPUT DATA → FLAG SEQUENCE GENERATING UNIT (11) → TRUE DATA COUNT COMPUTING UNIT (12) → MEAN CALCULATING UNIT (13) → MEAN

TRUE DATA COUNT COMPUTING UNIT (12) → MEDIAN CALCULATING UNIT (14) → MEDIAN

TRUE DATA COUNT COMPUTING UNIT (12) → MODE CALCULATING UNIT (15) → MODE

1
SECURE COMPUTATION DEVICE

# FIG. 3

```
        ┌─────────┐
        │  START  │
        └─────────┘
             │
┌──────────────────────────────┐
│    GENERATE FLAG SEQUENCE     │ ~S11
└──────────────────────────────┘
             │
┌──────────────────────────────┐
│  COMPUTE NUMBER OF TRUE DATA  │ ~S12
└──────────────────────────────┘
             │
┌──────────────────────────────┐
│        CALCULATE MEAN         │ ~S13
└──────────────────────────────┘
             │
┌──────────────────────────────┐
│       CALCULATE MEDIAN        │ ~S14
└──────────────────────────────┘
             │
┌──────────────────────────────┐
│        CALCULATE MODE         │ ~S15
└──────────────────────────────┘
             │
        ┌─────────┐
        │   END   │
        └─────────┘
```

EP 4 535 336 A1

# FIG. 4

FROM 12 ——→ | CORRECTION VALUE SEQUENCE GENERATING UNIT | ——→ | MEAN COMPUTING UNIT | ——→ MEAN

131

132

13
MEAN CALCULATING UNIT

FIG. 5

START

GENERATE CORRECTION VALUE SEQUENCE — S131

COMPUTE MEAN — S132

END

| v | f |
|---|---|
| 1 | 1 |
| 2 | 1 |
| 0 | 0 |
| 3 | 1 |
| 2 | 1 |
| 3 | 1 |
| 3 | 1 |

⇧

| v | f |
|---|---|
| 1 | 1 |
| 2 | 1 |
| NA | 0 |
| 3 | 1 |
| 2 | 1 |
| 3 | 1 |
| 3 | 1 |

FIG. 6

FIG. 7

FROM 12 → MISSING VALUE OVERWRITING UNIT (141) → VALUE ASCENDING SORT UNIT (142) → INDEX FLAG SEQUENCE GENERATING UNIT (143) → MEDIAN INDEX COMPUTING UNIT (144) → ODD FLAG SEQUENCE GENERATING UNIT (145) → EVEN FLAG SEQUENCE GENERATING UNIT (146) → MEDIAN COMPUTING UNIT (147) → MEDIAN

14
MEDIAN CALCULATING UNIT

EP 4 535 336 A1

# FIG. 8

START

OVERWRITE MISSING VALUE — S141

SORT VALUES IN ASCENDING ORDER — S142

GENERATE INDEX FLAG SEQUENCE — S143

COMPUTE MEDIAN INDEX — S144

GENERATE ODD FLAG SEQUENCE — S145

GENERATE EVEN FLAG SEQUENCE — S146

COMPUTE MEDIAN — S147

END

EP 4 535 336 A1

# FIG. 9

| v | f |
|----|---|
| 1 | 1 |
| 2 | 1 |
| NA | 0 |
| 3 | 1 |
| 2 | 1 |
| 3 | 1 |
| 3 | 1 |

⇨

| v' | f' |
|----|----|
| 1 | 1 |
| 2 | 1 |
| 3 | 1 |
| 2 | 1 |
| 3 | 1 |
| 3 | 1 |
| NA | 0 |

⇨

| v' | f' |
|--------|----|
| 1 | 1 |
| 2 | 1 |
| 3 | 1 |
| 2 | 1 |
| 3 | 1 |
| 3 | 1 |
| 0b1...1 | 0 |

# FIG. 10

| v' | f' |
|----|----|
| 1 | 1 |
| 2 | 1 |
| 3 | 1 |
| 2 | 1 |
| 3 | 1 |
| 3 | 1 |
| 0b1...1 | 0 |

⇨

| v" | f' |
|----|----|
| 1 | 1 |
| 2 | 1 |
| 2 | 1 |
| 3 | 1 |
| 3 | 1 |
| 3 | 1 |
| 0b1...1 | 0 |

⇨

| v" | f' | j |
|----|----|----|
| 1 | 1 | 0 |
| 2 | 1 | 1 |
| 2 | 1 | 2 |
| 3 | 1 | 3 |
| 3 | 1 | 4 |
| 3 | 1 | 5 |
| 0b1...1 | 0 | 6 |

## FIG. 11

| v" | f' | j | $f_{odd}$ | $f_{even}$ |
|---|---|---|---|---|
| 1 | 1 | 0 | 0 | 0 |
| 2 | 1 | 1 | 0 | 0 |
| 2 | 1 | 2 | 1 | 1 |
| 3 | 1 | 3 | 0 | 1 |
| 3 | 1 | 4 | 0 | 0 |
| 3 | 1 | 5 | 0 | 0 |
| 0b1...1 | 0 | 6 | 0 | 0 |

# FIG. 12

FROM 12 →

| MISSING VALUE OVERWRITING UNIT | VALUE ASCENDING SORT UNIT | BOUNDARY FLAG SEQUENCE GENERATING UNIT | GROUP COUNT COMPUTING UNIT |
| 151 | 152 | 153 | 154 |

| VALUE VECTOR GENERATING UNIT | FREQUENCY VECTOR COMPUTING UNIT | MODE OUTPUT UNIT |
| 155 | 156 | 157 |

→ MODE

15
MODE CALCULATING UNIT

# FIG. 13

```
           ┌─────────────┐
           │    START    │
           └──────┬──────┘
                  │
   ┌──────────────────────────────┐
   │    OVERWRITE MISSING VALUE    │─── S151
   └──────────────┬───────────────┘
                  │
   ┌──────────────────────────────┐
   │   SORT VALUES IN ASCENDING ORDER   │─── S152
   └──────────────┬───────────────┘
                  │
   ┌──────────────────────────────┐
   │  GENERATE BOUNDARY FLAG SEQUENCE   │─── S153
   └──────────────┬───────────────┘
                  │
   ┌──────────────────────────────┐
   │    COMPUTE NUMBER OF GROUPS   │─── S154
   └──────────────┬───────────────┘
                  │
   ┌──────────────────────────────┐
   │     GENERATE VALUE VECTOR     │─── S155
   └──────────────┬───────────────┘
                  │
   ┌──────────────────────────────┐
   │   COMPUTE FREQUENCY VECTOR    │─── S156
   └──────────────┬───────────────┘
                  │
   ┌──────────────────────────────┐
   │  SORT VECTORS AND OUTPUT MODE │─── S157
   └──────────────┬───────────────┘
                  │
           ┌─────────────┐
           │     END     │
           └─────────────┘
```

EP 4 535 336 A1

FIG. 14

EP 4 535 336 A1

| v | f |
|---|---|
| 1 | 1 |
| 2 | 1 |
| 0b1...1 | 0 |
| 3 | 1 |
| 2 | 1 |
| 3 | 1 |
| 3 | 1 |

⇨

| v' | f' |
|---|---|
| 1 | 1 |
| 2 | 1 |
| 2 | 1 |
| 3 | 1 |
| 3 | 1 |
| 3 | 1 |
| 0b1...1 | 0 |

⇨

| v' | f' | e |
|---|---|---|
| 1 | 1 | 1 |
| 2 | 1 | 0 |
| 2 | 1 | 1 |
| 3 | 1 | 0 |
| 3 | 1 | 0 |
| 3 | 1 | 1 |
| 0b1...1 | 0 | 1 |

# FIG. 15

| v' | f' | e |
|----|----|---|
| 1 | 1 | 1 |
| 2 | 1 | 0 |
| 2 | 1 | 1 |
| 3 | 1 | 0 |
| 3 | 1 | 0 |
| 3 | 1 | 1 |
| 0b1...1 | 0 | 1 |

| k |
|---|
| 1 |
| 2 |
| 3 |
| 0b... |

| s |
|---|
| 1 |
| 2 |
| 3 |
| 0 |

| k' | s' |
|----|----|
| 3 | 3 |
| 2 | 2 |
| 1 | 1 |
| 0b... | 0 |

# FIG. 16

EP 4 535 336 A1

## INTERNATIONAL SEARCH REPORT

International application No.

**PCT/JP2022/022486**

### A. CLASSIFICATION OF SUBJECT MATTER

*G09C 1/00*(2006.01)i
FI:   G09C1/00 650Z

According to International Patent Classification (IPC) or to both national classification and IPC

### B. FIELDS SEARCHED

Minimum documentation searched (classification system followed by classification symbols)

G09C1/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 5957126 B1 (NIPPON TELEGRAPH & TELEPHONE) 27 July 2016 (2016-07-27) paragraphs [0014]-[0050] | 1-6 |
| A | WO 2019/039383 A1 (NIPPON TELEGRAPH & TELEPHONE) 28 February 2019 (2019-02-28) paragraph [0017] | 1-6 |
| A | JP 2013-196609 A (TOSHIBA CORP) 30 September 2013 (2013-09-30) paragraphs [0094]-[0100] | 1-6 |

☐ Further documents are listed in the continuation of Box C.          ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 July 2022** | **26 July 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/022486**

| Patent document cited in search report | | | Publication date (day/month/year) | Patent family member(s) | | | Publication date (day/month/year) |
|---|---|---|---|---|---|---|---|
| JP | 5957126 | B1 | 27 July 2016 | US | 2018/0158377 | A1 | |
| | | | | paragraphs [0026]-[0072] | | | |
| | | | | EP | 3316235 | A1 | |
| | | | | CN | 107735830 | A | |
| WO | 2019/039383 | A1 | 28 February 2019 | US | 2020/0366466 | A1 | |
| | | | | paragraph [0025] | | | |
| | | | | EP | 3675090 | A1 | |
| | | | | CN | 111052205 | A | |
| JP | 2013-196609 | A | 30 September 2013 | CN | 103325002 | A | |

Form PCT/ISA/210 (patent family annex) (January 2015)

29

EP 4 535 336 A1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KOJI CHIDA** ; **KOKI HAMADA** ; **DAI IKARASHI** ; **KATSUMI TAKAHASHI**. Keiryo kensho kano 3 party hitoku kansu keisan no saiko (in Japanese) (A Three-Party Secure Function Evaluation with Lightweight Verifiability Revisited). *CSS*, 2010

- **NAOTO KIRIBUCHI** ; **DAI IKARASHI** ; **KOKI HAMADA** ; **RYO KIKUCHI**. MEVAL3: A Library for Programmable Secure Computation. *SCIS*, 2018
- *pandas.DataFrame.fillna*, 27 May 2022, https://pandas.pydata.org/docs/reference/api/pandas.DataFrame.fillna.html